# EUROPÄISCHE PATENTSCHRIFT

(11) **EP 1 294 976 B1**
(45) Veröffentlichungstag und Bekanntmachung des Hinweises auf die Patenterteilung: **15.03.2006**
(21) Anmeldenummer: 01945227.5
(22) Anmeldetag: 31.05.2001
(51) Int. Cl.: D06F 58/22

(54) **LUFTFÜHRENDES HAUSHALTGERÄT MIT WASCHBAREM FILTER**
AIR-CIRCULATING DOMESTIC APPLIANCE COMPRISING A WASHABLE FILTER
APPAREIL MENAGER DE VENTILATION COMPRENANT UN FILTRE LAVABLE

(30) Priorität: 15.06.2000 DE 10029428
(43) Veröffentlichungstag der Anmeldung: 26.03.2003
(73) Patentinhaber: BSH Bosch und Siemens Hausgeräte GmbH, 81739 München (DE)
(72) Erfinder: MOSCHÜTZ, Harald, 14979 Grossbeeren (DE)
(86) Internationale Anmeldenummer: PCT/EP2001/006212
(87) Internationale Veröffentlichungsnummer: WO 2001/096648

(56) Entgegenhaltungen:
- DE-A- 3 412 284
- DE-A- 19 617 753
- DE-A- 19 705 616
- GB-A- 2 307 399
- JP-A- 11 300 096
- US-A- 5 807 424
- PATENT ABSTRACTS OF JAPAN vol. 016, no. 315 (C-0961), 10. Juli 1992 (1992-07-10) & JP 04 090795 A (MATSUSHITA ELECTRIC IND CO LTD), 24. März 1992 (1992-03-24)

## Beschreibung

Die Erfindung betrifft einen Kondensationswäschetrockner, bei dem die Prozessluft in einem geschlossenen Kreislauf umgewälzt wird und in dessen Prozessluftkreislauf eine Heizeinrichtung zum Erwärmen der Prozessluft, eine Kühleinrichtung zum Abkühlen von mit Feuchtigkeit beladener Prozessluft und ein herausnehmbarer Filter zum Binden und/oder Zersetzen von in der Prozessluft befindlichen Geruchsstoffe angeordnet ist.

Durch die DE 197 05 616 A1 ist ein Wäschetrockner bekannt, bei dem einem ersten Flusenfilter ein zweites, feineres Tiefenfilter nachgeschaltet wird, das unter fließendem Wasser gereinigt werden kann. Das Tiefenfilter ist aus Schaumstoff hergestellt und muss daher vorsichtig gereinigt werden. Weiterhin erschöpft sich die Wirkung des Tiefenfilters in einer verbesserten Filterwirkung gegenüber den im Luftstrom mitgerissenen Flusen.

Ein weiterer bekannter Wäschetrockner (JP 11 300 096) mit einem Filterarrangement weist als zweites Filter ein spezielles Filterblatt zum Deodorieren und antibakteriellen Behandeln der abfließenden Prozessluft auf. Dieses Filterblatt besteht aus besonders beschichteten Vliesstoff-Fasern. Dieses Filterblatt ist schwer zu reinigen, da es einerseits aus Vliesstoff besteht und andererseits eine spezielle Beschichtung (Kupfersulfid) auf den darin enthaltenen Fasern aufweist, die bei einer Behandlung in einem üblichen Waschprozess abgewaschen und die Fasern sich aus dem Vliesstoffverband herauslösen würden, so dass eine Beeinträchtigung der Funktionseigenschaften des Filterblattes die Folge wäre. Nach wenigen Gebrauchszyklen muss daher ein solches Filterblatt ausgewechselt werden.

Der vorliegenden Erfindung liegt die Aufgabe zugrunde, einen Kondensationswäschetrockner der eingangs genannten Art mit einem Luftfilter erweiterter Funktionalität auszustatten, das zudem besser zu reinigen ist.

In der DE 196 17 753 A1 werden Filtersysteme, insbesondere Geruchs- und Schadstoff- Filter, beschrieben, die durch eine hygienische Wäsche von eingenisteten Baktenen befreit werden können. Solche Filter sind zur Anwendung von insbesondere Dunstabzugshauben und Staubsaugern vorgesehen.

Diese Aufgabe wird erfindungsgemäß durch einen eingangs beschriebenen Kondensationswäschetrockner gelöst, bei dem der Filter zum Binden und/oder Zersetzen der Geruchsstoffe ein flexibles Fasergewebe oder -gewirk hat und waschbar ist. Das genannte flexible Fasermaterial sorgt für eine mechanische Widerstandsfähigkeit des Filters, das eine gründliche Reinigung in einer Waschmaschine ermöglicht. Dieses Material kann somit mit einem hohen mechanischen Energieeintrag und auch bei hohen Temperaturen gewaschen werden. Auf diese Weise wird auch die Voraussetzung für eine Filterbehandlung geschaffen, die es ermöglicht, Geruchsfilter in ausreichendem Maße zu reinigen und/zu regenerieren.

Das Fasermaterial kann mit Partikeln eines Stoffes behandelt werden, der Geruchsstoffe binden kann und aus dem die Geruchsstoffe auch wieder ausgewaschen werden können. Diese Partikel können Aktivkohle oder besondere Mineralien sein. Denkbar ist auch eine Behandlung des Fasermaterials mit katalytisch wirkenden Stoffen, die Geruchsstoffe zersetzen können.

Vorteilhafterweise weist das Fasergewebe oder -gewirk nur derart weiche Komponenten auf, dass beim Waschen des Filters in einer Waschmaschine eine Beschädigung der Waschmaschine vermeidbar ist. Dadurch kann es wie ganz normale Wäsche auch in einer Haushaltwaschmaschine gewaschen werden, ohne dass die Gefahr einer Beschädigung der Waschmaschine besteht.

Das Fasergewebe oder -gewirk kann in einem Rahmen aus Unterteil und Oberteil des Filters zum Haltern und Aufspannen des Fasergewebes oder -gewirks innerhalb des Prozessluftstroms vorgesehen sein. Das Fasergewebe oder -gewirk kann in diesem Fall aus einem Abschnitt eines am Strang fertigbaren Filtermaterials bestehen, so dass es sehr kostengünstig zur Verfügung gestellt werden kann. Der Rahmen für das Filter ist vorteilhafterweise aus dem Wäschetrockner herausnehmbar, um das Einlegen und Entnehmen des Filters zu erleichtern.

Zusätzlich kann dem Filter ein Grobfilter zum Entfemen von Teilchen aus dem Luftstrom vorgeschaltet werden. Das Filter kann somit gegen Grobteilchen geschützt werden, die es zusetzen oder in seiner Wirkung beeinträchtigen könnten.

Vorteilhafterweise wird die Erfindung in einem Kondensationswäschetrockner eingesetzt, bei dem eine Steuereinrichtung vorgesehen ist, die derart eingerichtet ist, dass die Prozessluft in einem geschlossenen Kreislauf umgewälzt und in dessen Prozessluftkreislauf eine Heizeinrichtung zum Erwärmen der Prozessluft, eine Kühleinrichtung zum Abkühlen von mit Feuchtigkeit beladener Prozessluft, das Filter und ein vorgeschaltetes Flusenfilter als Grobfilter angeordnet sind.

Bei diesem Anwendungsfall kann einem häufigen Bedürfnis der Anwender Rechnung getragen werden, das auf das Befreien der Wäsche von unangenehmen Geruchsstoffen abzielt. Dies kann der Fall sein, wenn das Kleidungsstück Zigarettenrauch ausgesetzt war und nur ein Lüften des Kleidungsstücks gewünscht wird. Das Geruchsfilter wird innerhalb des Prozessluftkreislaufs vorteilhafterweise an der Stelle angeordnet, an der die besten Bedingungen für die Entfernung der Geruchsstoffe aus der Prozessluft herrschen. So ist z. B. im Abschnitt zwischen Kühleinrichtung und Heizeinrichtung die Temperatur der Prozessluft am niedrigsten und die relative Luftfeuchtigkeit am höchsten, und nach der Heizeinrichtung und vor Berührung mit der zu trocknenden Wäsche die Temperatur am höchsten und die relative Luftfeuchtigkeit am niedrigsten.

Die Steuereinrichtung des Kondensationswäschetrockners kann vorteilhafterweise so eingerichtet sein, dass die Prozessluft auf eine unterhalb der üblicherweise zum Wäschetrocknen verwendete Temperatur erwärmt und umgewälzt werden kann. So kann die Wäsche schonender behandelt und trotzdem gelüftet werden, wobei durch die verringerte Temperatur auch Energie eingespart werden kann. Darüber hinaus kann die Steuereinrichtung so eingerichtet sein, dass die Prozessluft auch bei abgeschalteter Kühleinrichtung umgewälzt werden kann. Eine Abkühlung der Prozessluft ist beim Lüften nicht erforderlich, da keine Feuchtigkeit aus der Prozessluft entfernt werden muss und somit weiter Energie gespart werden kann.

Weitere Einzelheiten, Merkmale und Vorteile der Erfindung ergeben sich aus der folgenden Beschreibung zweier Ausführungsbeispiele einer erfindungsgemäßen Vorrichtung unter Bezugnahme auf die Zeichnungen. Darin zeigen:
- Fig. 1: eine schematische Schnittansicht durch einen erfindungsgemäßen Wäschetrockner und
- Fig. 2: eine Aufnahme für das Geruchsfilter im Schnitt.

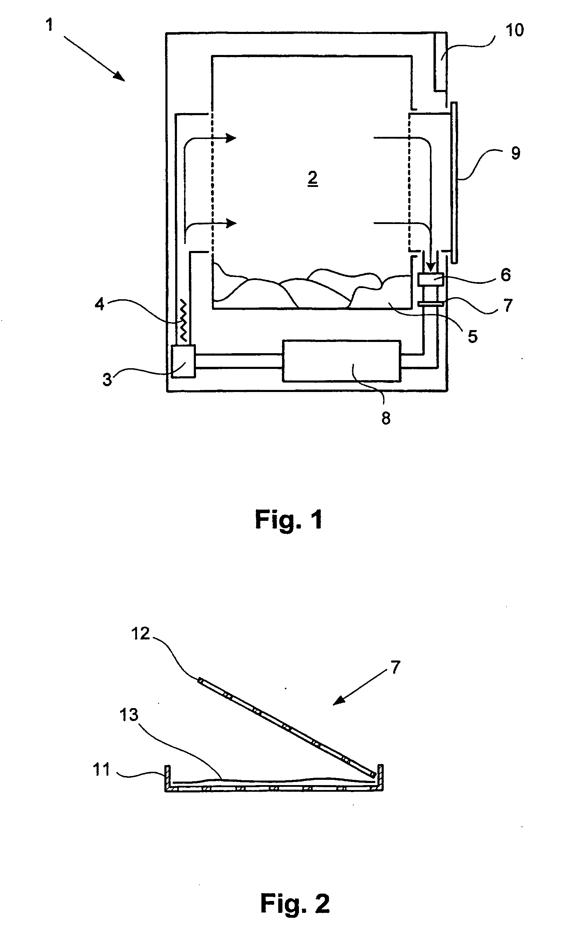

Der in Fig. 1 dargestellte Haushaltwäschetrockner 1 weist eine drehbar gelagerte Trommel 2 zur Aufnahme der zu trocknenden Wäsche 5 auf. Die Trommel 2 weist einen gelochten Trommelboden und auf der gegenüberliegenden Stirnseite eine Beschickungsöffnung auf, die mittels einer am Gehäuse des Haushaltwäschetrockners 1 angelenkten Tür 9 verschlossen werden kann. Im Betrieb wird von einem Gebläse 3 ein Trockenluftstrom erzeugt, der zu einer Heizeinrichtung 4 und anschließend durch den gelochten Trommelboden in die Trommel 2 geleitet wird. Nach Berührung mit der Wäsche 5 durchströmt die Trockenluft zuerst die Tür 9, ein grobes Flusenfilter 6 und anschließend das in einer Aufnahme 7 gehaltene Geruchsfilter 13. Anschließend wird die Trockenluft zu einem Kondensator 8 geleitet, in dem die Trockenluft zur Kondensation von darin enthaltener Wäschefeuchte abgekühlt wird. Der Kondensator 8 wird dazu von Kühlluft durchströmt, die von der Umgebung des Haushaltwäschetrockners 1 angesaugt wird. Nach Durchströmen des Kondensators 8 wird die Trockenluft wieder vom Gebläse 3 angesaugt.

Die in Fig. 2 im Schnitt dargestellte Aufnahme 7 dient als Halterahmen für das Geruchsfilter 13. Der Halterahmen 7 weist zu diesem Zweck ein flächiges schalenförmiges Unterteil 11 auf, dessen Boden große Öffnungen für den Durchtritt der Prozeßluft aufweist. Auf dieses Unterteil 11 kann ein klappbares Oberteil 12 heruntergeklappt und verriegelt werden, wobei das Oberteil 12 im wesentlichen den gesamten Boden des Unterteils 11 bedecken kann und Öffnungen aufweist, die im heruntergeklappten Zustand jeweils über den Öffnungen im Unterteil 11 zu liegen kommen. Zwischen dem Unterteil 11 und dem Oberteil 12 kann ein Geruchsfilter 13 , welcher zum Binden und/oder Zersetzen der Geruchsstoffe ein flexibles Fasergewebe oder -gewirk (13) hat, festgehalten werden. Das Geruchsfilter 13 ist dazu mit einer Substanz behandelt, die Geruchsstoffe binden kann und aus der die Geruchsstoffe auch wieder herausgewaschen werden können, um das Geruchsfilter 13 zu regenerieren und somit für einen dauerhaften Gebrauch geeignet zu machen. Das Geruchsfilter 13 weist keinerlei harte Komponenten auf und kann somit wie gewöhnliche Wäsche in einer Waschmaschine gewaschen werden.

Die Aufnahme 7 kann von außen, insbesondere durch eine besondere Klappe, im Prozeßluftkreislauf des Wäschetrockners 1 angeordnet und daraus entnommen werden.

Der in Fig. 1 dargestellte Wäschetrockner 1 weist zusätzlich eine Steuereinrichtung 10 zum Ansteuern des Gebläses 3, der Heizeinrichtung 4 und eines nicht dargestellten weiteren Gebläses auf, das den Kondensator 8 mit Kühlluft versorgen kann. Die Steuereinrichtung 10 ist so eingerichtet, dass in einem Programm zum Lüften der Wäsche 5 die Prozeßluft bei verringerter Temperatur bei sich drehender Trommel 2 umgewälzt werden kann, wobei das Gebläse für den Kondensator 8 ausgeschaltet ist, um die Prozeßluft nicht unnötig abzukühlen. Dabei kann neben dem normalen Trockenprogramm neben der Temperatur der Prozeßluft bzw. der Heizleistung der Heizeinrichtung 4 auch die Bewegung der Wäschetrommel 2 verringert werden.

## Patentansprüche

1. Kondensationswäschetrockner (1), bei dem die Prozessluft in einem geschlossenen Kreislauf umgewälzt wird und in dessen Prozessluftkreislauf eine Heizeinrichtung (4) zum Erwärmen der Prozessluft, eine Kühleinrichtung (8) zum Abkühlen von mit Feuchtigkeit beladener Prozessluft und ein herausnehmbarer Filter (7) zum Binden und/oder Zersetzen von in der Prozessluft befindlichen Geruchsstoffe angeordnet ist, wobei der Filter (7) zum Binden und/oder Zersetzen der Geruchsstoffe ein flexibles Fasergewebe oder -gewirk (13) hat und, waschbar ist damit das Fasergewebe oder -gewirk (13) regenerierbar und für den dauerhaften Gebrauch geeignet ist.

2. Kondensationswäschetrockner nach Anspruch 1, **dadurch gekennzeichnet, dass** das herausnehmbare und waschbare Fasergewebe oder -gewirk (13) nur derart weiche Komponenten aufweist, dass beim Waschen des Filters in einer Waschmaschine eine Beschädigung der Waschmaschine vermeidbar ist.

3. Kondensationswäschetrockner nach Anspruch 1 oder 2, **dadurch gekennzeichnet, dass** das Fasergewebe oder -gewirk (13) in einem Rahmen aus Unterteil (11) und Oberteil (12) des Filters (7) zum Haltern und Aufspannen des Fasergewebes oder -gewirks (13) innerhalb des Prozessluftstroms vorgesehen ist.

4. Kondensationswäschetrockner nach Anspruch 3, **dadurch gekennzeichnet, dass** der Filter (7) aus dem Kondensationswäschetrockner herausnehmbar ist.

5. Kondensationswäschetrockner nach einem der Ansprüche 1 bis 4, **dadurch gekennzeichnet, dass** dem Fasergewebe oder -gewirk (13) ein Grobfilter (6) insbesondere Flusenfilter zum Entfemen von Teilchen aus dem Luftstrom vorgeschaltet ist.

6. Kondensationswäschetrockner nach einem der Ansprüche 1 bis 5, **dadurch gekennzeichnet, dass** eine Steuereinrichtung (10) vorgesehen ist, die derart eingerichtet ist, dass die Prozessluft auf eine unterhalb der zum Wäschetrocknen verwendeten Temperatur erwärmt und umgewälzt werden kann.

7. Kondensationswäschetrockner nach Anspruch 6, **dadurch gekennzeichnet, dass** die Steuereinrichtung (10) derart eingerichtet ist, dass die Prozessluft bei abgeschalteter Kühleinrichtung (8) umgewälzt werden kann.

## Claims

1. Condensation laundry drier (1), in which the process air is circulated in a closed circuit and in the process air circuit of which are arranged a heating device (4) for heating the process air, a cooling device (8) for cooling process air laden with moisture and a removable filter (7) for binding and/or breaking down odoriferous substances present in the process air, wherein the filter (7) for binding and/or breaking down the odoriferous substances has a flexible woven fibrous material or a method fibrous material (13) and is washable, so that the woven fibrous material or knitted fibrous material (13) can be regenerated and is suitable for permanent use.

2. Condensation laundry drier according to claim 1, **characterised in that** the removable and washable woven fibrous material or knitted fibrous material (13) has only soft components such that on washing of the filter in a washing machine damage of the washing machine is avoidable.

3. Condensation laundry drier according to claim 1 or 2, **characterised in that** the woven fibrous material or knitted fibrous material (13) is provided in a frame consisting of lower part (11) and upper part (12) of the filter (7) for holding and stretching the woven fibrous material or knitted fibrous material (13) within the process air flow.

4. Condensation laundry drier according to claim 3, **characterised in that** the filter (7) is removable from the condensation laundry drier.

5. Condensation laundry drier according to one of claims 1 to 4, **characterised in that** a coarse filter (6), particularly a lint filter for removal of particles from the air flow, is connected upstream of the woven fibrous material or knitted fibrous material (13).

6. Condensation laundry drier according to one of claims 1 to 5, **characterised in that** a control device (10) is provided, which is equipped in such a manner that the process air can be heated to a temperature below that used for the laundry drying and can be circulated.

7. Condensation laundry drier according to claim 6, **characterised in that** the control device (10) is equipped in such a manner that the process air can be circulated when the cooling device (8) is switched off.

## Revendications

1. Sèche-linge à condensation (1), dans lequel l'air du processus est en circulation dans un circuit fermé et dans le circuit de l'air de processus duquel sont disposés un dispositif de chauffage (4) destiné à échauffer l'air du processus, un dispositif de refroidissement (8) destiné à refroidir de l'air du processus chargé d'humidité et un filtre amovible (7) destiné à fixer et/ou décomposer des substances odorantes se trouvant dans l'air du processus, le filtre (7) destiné à fixer et/ou détruire les substances odorantes ayant un tissu en fibres flexible ou un tricot en fibres flexible (13) et étant lavable dans un lave-linge afin que le tissu en fibres ou le tricot en fibres soit régénérable et approprié à une utilisation durable.

2. Sèche-linge à condensation selon la revendication 1, **caractérisé en ce que** le tissu en fibres ou le tricot en fibres (13), amovible et lavable, présente seulement des composants mous, de telle manière que, lors du lavage du filtre dans un lave-linge, une détérioration du lave-linge est évitable.

3. Sèche-linge à condensation selon la revendication 1 ou 2, **caractérisé en ce que** le tissu en fibres ou le tricot en fibres (13) est prévu dans un cadre composé d'une partie inférieure (11) et d'une partie supérieure (12) du filtre (7) pour maintenir et tendre le tissu en fibres ou le tricot en fibres (13) à l'intérieur du flux d'air du processus.

4. Sèche-linge à condensation selon la revendication 3, **caractérisé en ce que** le filtre (7) peut être retiré du sèche-linge à condensation.

5. Sèche-linge à condensation selon l'une quelconque des revendications 1 à 4, **caractérisé en ce qu'**un filtre grossier (6), notamment un filtre à peluche destiné à enlever des particules hors du flux d'air, est installé en amont du tissu en fibres ou du tricot en fibres (13).

6. Sèche-linge à condensation selon l'une quelconque des revendications 1 à 5, **caractérisé en ce qu'**un dispositif de commande (10) est prévu, qui est configuré de telle manière que l'air du processus peut être échauffé à une température située en dessous de celle utilisée pour sécher le linge et être mis en circulation.

7. Sèche-linge à condensation selon la revendication 6, **caractérisé en ce que** le dispositif de commande (10) est configuré de telle manière que l'air du processus peut être mis en circulation lorsque le dispositif de refroidissement (8) est arrêté.
